# EUROPÄISCHE PATENTSCHRIFT

(11) **EP 0 780 146 B1**
(45) Veröffentlichungstag und Bekanntmachung des Hinweises auf die Patenterteilung: **24.01.2001**
(21) Anmeldenummer: 96119825.6
(22) Anmeldetag: 11.12.1996
(51) Int. Cl.: B01D 1/00, B01D 1/22, C13G 1/00

(54) **Dampfbeheizte Vorrichtung zur Verdampfung oder Eindickung von Flüssigkeiten**
Steam-heated apparatus for evaporating and thickening liquids
Appareil chauffé à la vapeur pour l'évaporation et l'épaississement de liquides

(30) Priorität: 21.12.1995 DE 29520263 U
(43) Veröffentlichungstag der Anmeldung: 25.06.1997
(73) Patentinhaber: Balcke-Dürr Energietechnik GmbH, 46049 Oberhausen (DE)
(72) Erfinder: Korres, Jürgen, Dipl.-Phys., 40882 Ratingen (DE); Eggert, Hans, Dipl.-Ing., 45259 Essen (DE)
(74) Vertreter: Stenger, Watzke & Ring Patentanwälte

(56) Entgegenhaltungen:
- EP-A- 0 153 974
- DE-A- 1 519 637
- DE-A- 1 519 742
- DE-A- 1 692 967

## Beschreibung

Die Erfindung betrifft eine Vorrichtung zur Verdampfung oder Eindickung von Flüssigkeiten mit mindestens einem Wärmetauscher, dem die Flüssigkeit von oben durch eine Flüssigkeitsverteilung derart aufgegeben wird, daß die Flüssigkeit als Fallfilm auf der Innenfläche von senkrecht verlaufenden Kanälen innerhalb des Wärmetauschers nach unten fließt und hierbei im Kreuz- und/oder Gegenstrom mit Dampf beheizt wird, wobei die Flüssigkeitsverteilung einen wannenförmigen Flüssigkeitsverteiler umfaßt.

Vorrichtungen der voranstehend beschriebenen Art sind aus den DE-A 1 519 742 und DE-A 1 519 637 bekannt. Diese zeigen jeweils eine dampfbeheizte Vorrichtung zur Verdampfung oder Eindickung von Flüssigkeiten mit mindestens einem Wärmetauscher, dem die Flüssigkeit von oben durch eine Flüssigkeitsverteilung derart aufgegeben wird, daß die Flüssigkeit als Fallfilm auf der Innenfläche von senkrecht verlaufenden Kanälen innerhalb des Wärmetauschers nach unten fließt und hierbei im Kreuz- und/oder Gegenstrom mit Dampf beheizt wird, wobei die Flüssigkeitsverteilung einen wannenförmigen Flüssigkeitsverteiler umfaßt. Hierbei wird die zu verdampfende oder einzudickende Flüssigkeit der dampfbeheizten Vorrichtung von oben aufgegeben und durchströmt einen Entspannungsraum, in dem aus der zu verdampfenden oder einzudickenden Flüssigkeit Brüden austreten. Die Trennung zwischen Flüssigkeit und Brüden (Dampf) wird durch Prallplatten oder ähnliche Einbauten begünstigt. Während die (entgaste) Flüssigkeit von einer wannenförmigen Verteileinrichtung auf die die Heizrohre aufnehmende Rohrplatte des als Röhrenwärmetauscher ausgebildeten Wärmetauschers geleitet wird, strömen die Brüden in dem die wannenförmige Verteileinrichtung umgebenden Ringraum nach unten und treten gemeinsam mit der Flüssigkeit in die Heizrohre des Röhrenwärmetauschers ein.

Bei den bekannten Vorrichtungen findet somit keine Trennung zwischen Flüssigkeit und Brüden vor deren Eintritt in die Rohre des Röhrenwärmetauschers statt. Die Brüden können deshalb eine gleichmäßige Verteilung der einzudickenden oder zu verdampfenden Flüssigkeit auf die Rohre des Röhrenwärmetauschers nachteilig beeinflussen. Aus diesem Grunde ist es bei beiden bekannten Vorrichtungen erforderlich, die aus dem gelochten Boden der Verteilwanne austretenden Flüssigkeitsstrahlen exakt zu den Rohren des Röhrenwärmetauschers auszurichten. Während diese Ausrichtung bei der Vorrichtung gemäß DE-A 1 519 637 auf den zwischen den Rohren befindlichen Steg des Rohrbodens erfolgt, zeigt die Vorrichtung nach DE-A 1 519 742 wahlweise eine Ausrichtung auf diesen Steg oder aber unmittelbar auf die oberen Enden der Rohre.

Da insbesondere bei geringen Durchflußmengen der einzudickenden bzw. zu verdampfenden Flüssigkeit wegen der ebenfalls in die Rohre des Röhrenwärmetauschers eintretenden Brüden eine gleichmäßige Verteilung der Flüssigkeit auf sämtliche Rohre nicht sichergestellt werden kann, haben die bekannten Vorrichtungen den Nachteil, daß einzelne Rohre nur unzureichend mit Flüssigkeit beaufschlagt werden können, wodurch einerseits eine Überhitzung der Flüssigkeit und andererseits eine Überhitzung des jeweiligen Rohres stattfinden kann. In dem einen Fall führt die Überhitzung der Flüssigkeit zu einer Verkokung; im anderen Fall führt die Überhitzung des Rohres zu einer Beschädigung desselben.

Ausgehend von dem bekannten Stand der Technik liegt deshalb der Erfindung die Aufgabe zugrunde, eine dampfbeheizte Vorrichtung der voranstehend beschriebenen Art zur Verdampfung oder Eindickung von Flüssigkeiten derart weiterzubilden, daß auch bei geringen Durchsatzmengen unzulässige thermische Belastungen sowohl der Flüssigkeit als auch des Wärmetauschers vermieden werden.

Die Lösung dieser Aufgabenstellung durch die Erfindung ergibt sich aus dem Wortlaut des Patentanspruches 1.

Während bei den bekannten Vorrichtungen auf dem unmittelbar über dem Rohrboden des Röhrenwärmetauschers befindlichen Boden der Verteilwanne ein Flüssigkeitsstand gehalten wird, wird bei der erfindungsgemäßen Vorrichtung dieser Flüssigkeitsstand lediglich auf dem Vorverteilblech gehalten, das sich im Gegensatz zum bekannten Stand der Technik über den gesamten Querschnitt des Gehäuses erstreckt und auf diese Weise zusammen mit dem auf dem Vorverteilblech gehaltenen Flüssigkeitsstand eine Abdichtung des Dampfraumes zum Wärmetauscher bildet. Bei der erfindungsgemäßen Vorrichtung können deshalb keine Brüden in den Wärmetauscher eintreten und die Flüssigkeitsverteilung nachteilig beeinflussen.

Anstelle eines Röhrenwärmetauschers mit einer begrenzten Anzahl von Rohren mit verhältnismäßig großem Rohrquerschnitt wird bei der erfindungsgemäßen Vorrichtung ein Plattenwärmetauscher verwendet, der eine erheblich größere Anzahl von senkrecht von oben nach unten verlaufenden Kanälen mit erheblich kleinerem Querschnitt hat, wodurch sich insgesamt eine größere Wärmetauscherfläche ergibt.

Da bei derartigen Plattenwärmetauschern die Gefahr örtlicher Überhitzungen durch mangelhafte Beaufschlagung eines Kanals mit Flüssigkeit erheblich größer ist als bei den bekannten Vorrichtungen mit Röhrenwärmetauschern, muß für eine exakte Flüssigkeitsverteilung auf sämtliche Kanäle des Plattenwärmetauschers gesorgt werden, und zwar über den gesamten Bereich der zwischen einem Minimum und einem Maximum liegenden Durchflußmenge.

Zu diesem Zweck sind unterhalb des einen Flüssigkeitsstand haltenden Vorverteilbleches zwei Verteilbleche angeordnet, auf denen kein Flüssigkeitsstand gehalten wird. Durch das Fernhalten der Brüden und durch diese beiden Verteilbleche ist es erstmals möglich, über den gesamten Leistungsbereich der Vorrichtung eine gleichmäßige Flüssigkeitsverteilung auf die Oberseite des Plattenwärmetauschers sicherzustellen und damit trotz der Verwendung eines derartigen Plattenwärmetauschers mit im Querschnitt kleinen Kanälen örtlich Überhitzungen sowohl der Flüssigkeit als auch des Plattenwärmetauschers zu vermeiden.

Da auf der Oberseite des mit einer Vielzahl von Löchern versehenen Vorverteilbleches ein Flüssigkeitsstand mit konstanter Füllhöhe aufrechterhalten wird, tritt die zu verdampfende bzw. einzudickende Flüssigkeit stets aus allen Löchern des Vorverteilbleches aus. Die austretenden Strahlen treffen erfindungsgemäß auf das unterhalb des Vorverteilbleches angeordnete Verteilblech auf, das mit Löchern größeren Durchmessers versehen und derart angeordnet ist, daß jeder aus einem Loch des Vorverteilbleches austretende Flüssigkeitsstrahl zumindest teilweise auf einen zwischen den Löchern des Verteilbleches vorhandenen Steg auftritt. Auf diese Weise wird das Verteilblech auf seiner gesamten Oberfläche mit einem dünnen Flüssigkeitsfilm bedeckt, so daß die Flüssigkeit aus sämtlichen Löchern des Verteilbleches austritt. Die sich hierbei bildenden Flüssigkeitsstrahlen treffen aufgrund des Versatzes des unteren Verteilbleches zum oberen Verteilblech wiederum auf zwischen den Löchern des unteren Verteilbleches vorhandene Stege zumindest teilweise auf, so daß auch das zweite Verteilblech vollständig mit einem dünnen Flüssigkeitsfilm überzogen wird.

Da das Abtropfen der Flüssigkeit von den Verteilblechen nicht gleichmäßig geschieht, sondern die Flüssigkeitsstrahlen ständig ihre Richtung und Intensität ändern, werden alle Kanäle des Plattenwärmetauschers gleichmäßig mit Flüssigkeit beaufschlagt, so daß auch bei geringen Flüssigkeitsdurchsatzmengen örtlich innerhalb des Plattenwärmetauschers keine unzulässig hohen thermischen Belastungen der Flüssigkeit auftreten. Die erfindungsgemäße Vorrichtung kann somit mit lediglich einem Zehntel der Mindestdurchsatzmenge herkömmlicher Vorrichtungen betrieben werden, ohne daß die thermische Belastung der Flüssigkeit das zulässige Maß übersteigt. Außerdem werden konstruktiv aufwendige und den Energieverbrauch steigernde Umwälzungen der Flüssigkeit vermieden.

Gemäß einem weiteren Merkmal der Erfindung sind bei einem Vorverteilblech mit 500 bis 1000 Löchern pro m² von jeweils 6 mm Durchmesser die Verteilbleche mit etwa 5000 Löchern pro m² von jeweils 10 mm Durchmesser versehen und in einem Abstand voneinander von etwa 10 bis 20 mm angeordnet.

Auf der Zeichnung ist ein Ausführungsbeispiel der erfindungsgemäßen Vorrichtung dargestellt, und zwar zeigen:
- Fig. 1: einen schematischen Längsschnitt durch eine erfindungsgemäße Vorrichtung und
- Fig. 2: eine perspektivische Darstellung eines Ausschnittes der übereinander angeordneten Vorverteil- und Verteilbleche.

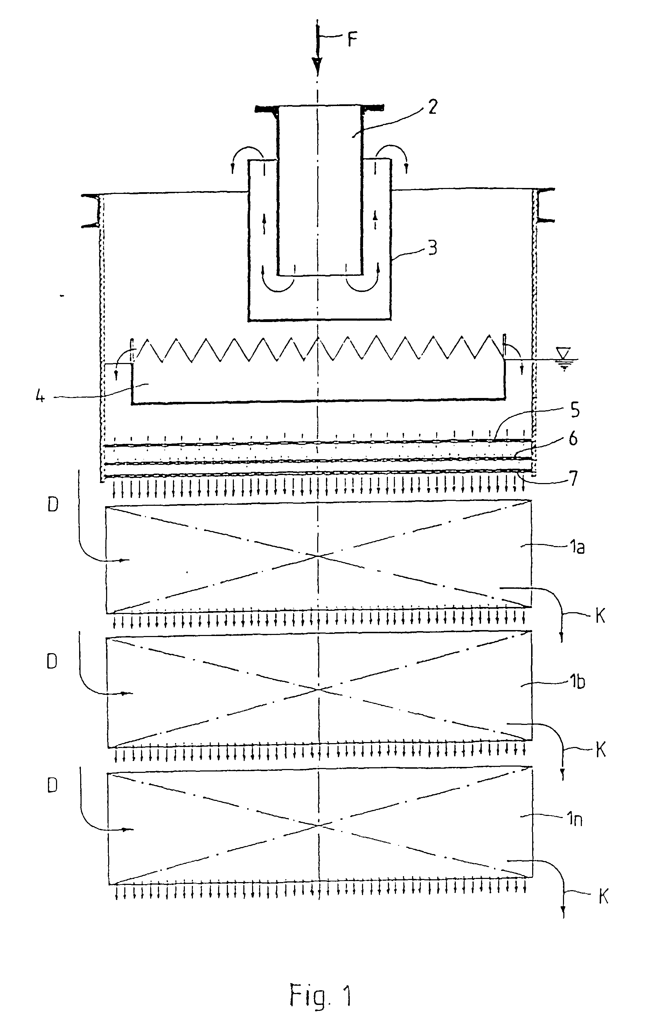

Wie aus der schematischen Darstellung gemäß Fig. 1 hervorgeht, umfaßt die Vorrichtung zur Verdampfung oder Eindickung von Flüssigkeiten F mehrere Plattenwärmetauscher 1a,1b,1n, denen die Flüssigkeit F jeweils von oben her aufgegeben wird, wobei die Flüssigkeit F in bekannter Weise etwa senkrecht verlaufende Kanäle der Plattenwärmetauscher 1a,1b und 1n durchläuft. Da derartige Plattenwärmetauscher 1a,1b,1n bekannt sind, wurden sie in Fig. 1 nur schematisch angedeutet. Die Darstellung zeigt ebenfalls, daß die Plattenwärmetauscher 1a,1b,1n (beim Ausführungsbeispiel im Kreuzstrom) mit Dampf D beheizt werden, um eine Verdampfung oder Eindickung der Flüssigkeit F zu erzielen. Auch das aus den Plattenwärmetauschern 1a,1b,1n ablaufende Kondensat K ist schematisch in Fig. 1 angedeutet.

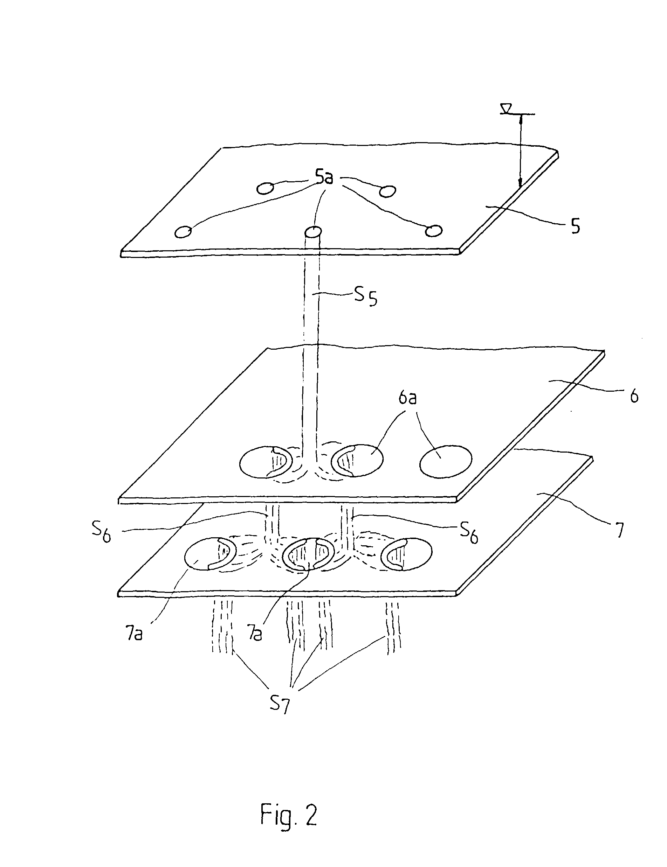

Die Verteilung der über ein Tauchrohr 2 und einen Überlaufbehälter 3 zugeführten Flüssigkeit F auf die gesamte Oberfläche des obenliegenden Plattenwärmetauschers 1a erfolgt mit Hilfe einer Vorverteilung, die beim Ausführungsbeispiel aus einem schalenförmigen Flüssigkeitsverteiler 4 besteht. In diesem Flüssigkeitsverteiler 4 wird ein konstantes Flüssigkeitsniveau gehalten, wie dies in Fig. 1 angedeutet ist. Der Flüssigkeitsverteiler 4 hat beim Ausführungsbeispiel einen gezahnten Rand, durch den die überlaufende Flüssigkeit auf ein Vorverteilblech 5 gelangt. Unterhalb dieses Vorverteilbleches 5 befinden sich mindestens zwei im Abstand zueinander sowie parallel verlaufende Verteilbleche 6 und 7. Ein perspektivisch gezeichneter Ausschnitt der Anordnung aus Vorverteilblech 5 und Verteilblechen 6 und 7 ist in Fig. 2 vergrößert dargestellt.

Diese Darstellung zeigt das Vorverteilblech 5, das konstant mit Flüssigkeit F beaufschlagt wird und das mit einer Vielzahl von Löchern 5a versehen ist, aus denen die Flüssigkeit in Form von Flüssigkeitsstrahlen S₅ austritt. In Fig. 2 ist nur ein derartiger Flüssigkeitsstrahl S₅ eingezeichnet.

Dieser Flüssigkeitsstrahl S₅ trifft auf das im Abstand unterhalb des Vorverteilbleches 5 angeordnete Verteilblech 6 auf, und zwar im Bereich eines Steges, der sich zwischen den Löchern 6a des Verteilbleches 6 ergibt. Die in dieser Weise auf das Verteilblech 6 in Form des Flüssigkeitsstrahls S₅ auftreffende Flüssigkeit verteilt sich auf mindestens zwei der Auftreffstelle benachbarte Löcher 6a des Verteilbleches 6, aus denen wiederum Flüssigkeitsstrahlen S₆ austreten, die ihrerseits auf Stege zwischen den Löchern 7a des unteren Verteilbleches 7 auftreffen. Die hierdurch bewirkte mehrfache Aufteilung der Flüssigkeit F in eine Vielzahl von Flüssigkeitsstrahlen S₅ und S₆ führt zu einer gleichmäßigen Verteilung der zu verdampfenden bzw. einzudickenden Flüssigkeit F, die in Form der Flüssigkeitsstrahlen S₇ auf die gesamte Oberfläche des obersten Plattenwärmetauschers 1a gelangt.

Bei einer bevorzugten Ausführungsform wird das Vorverteilblech 5 mit 500 bis 1000 Löchern pro m² von jeweils 6 mm Durchmesser versehen, während die Verteilbleche 6 und 7 mit etwa 5000 Löchern pro m² von jeweils 10 mm Durchmesser versehen sind. Der Abstand der beiden Verteilbleche 6 und 7 beträgt hierbei etwa 20 mm.

Durch die Aufteilung und hiermit verbundene Verfeinerung der Flüssigkeitsstrahlen und durch die ständige Änderung ihrer Richtung und Intensität werden alle Kanäle des Plattenwärmetauschers 1a gleichmäßig mit Flüssigkeit F beaufschlagt, so daß selbst bei geringen Flüssigkeitsdurchsatzmengen innerhalb aller Plattenwärmetauscher 1a,1b,1n keine unzulässig hohen thermischen Belastungen der Flüssigkeit F auftreten. Die Vorrichtung kann somit mit sehr geringen Durchsatzmengen ohne eine aufwendige und den Energieverbrauch steigernde Umwälzung der Flüssigkeit F betrieben werden, ohne daß die thermische Belastung der Flüssigkeit F das zulässige Maß übersteigt.

## Patentansprüche

1. Dampfbeheizte Vorrichtung zur Verdampfung oder Eindickung von Flüssigkeiten, beispielsweise Meerwasser oder Zuckerrübensaft, mit mindestens einem als Plattenwärmetauscher (1a, 1b, 1n) ausgebildeten Wärmetauscher, dem die Flüssigkeit von oben durch eine einen wannenförmigen Flüssigkeitsverteiler (4) umfassende Flüssigkeitsverteilung derart aufgegeben wird, daß die Flüssigkeit als Fallfilm auf der Innenfläche von senkrecht verlaufenden Kanälen innerhalb des Plattenwärmetauschers (1a, 1b, 1n) nach unten fließt und hierbei im Kreuz- und/oder Gegenstrom mit Dampf beheizt wird, wobei zwischen der Oberseite des (obersten) Plattenwärmetauschers (1a) und dem Flüssigkeitsverteiler (4) im Abstand und parallel zueinander ein konstant mit Flüssigkeit beaufschlagtes Vorverteilblech (5) mit einer Vielzahl von Löchern (5a) und mindestens zwei Verteilbleche (6, 7) mit einem Lochbild aus Löchern (6a, 7a) angeordnet sind, wobei sich das Vorverteilblech (5) und die Verteilbleche (6, 7) über den gesamten Gehäusequerschnitt erstrecken, der Durchmesser der Löcher (6a, 7a) der Verteilbleche (6, 7) größer als der Durchmesser der Löcher (5a) des Vorverteilbleches (5) ist und die Löcher (5a, 6a, 7a) derart zueinander ausgerichtet sind, daß die aus den Löchern (5a, 6a) austretenden Flüssigkeitsstrahlen (S₅, S₆) zumindest teilweise auf einen zwischen den Löchern (6a, 7a) des jeweils darunter befindlichen Verteilbleches (6, 7) vorhandenen Steg auftreffen.

2. Vorrichtung nach Anspruch 1, dadurch gekennzeichnet, daß bei einem Vorverteilblech (5) mit 500 bis 1000 Löchern pro m² von jeweils 6 mm Durchmesser die Verteilbleche (6, 7) mit etwa 5000 Löchern pro m² von jeweils 10 mm Durchmesser versehen und in einem Abstand voneinander von etwa 10 bis 20 mm angeordnet sind.

## Claims

1. Steam-heated apparatus for evaporating or thickening liquids, for example sea water or sugar-beet juice, having at least one heat exchanger, which is designed as a plate-type heat exchanger (1a, 1b, 1n) and to which the liquid is delivered from above by a liquid distribution comprising a trough-shaped liquid distributor (4) in such a way that the liquid flows downwards as a falling film onto the inner surface of perpendicular passages inside the plate-type heat exchanger (1a, 1b, 1n) and in the process is heated with steam in crossflow and/or counterflow, a predistribution plate (5) to which liquid is constantly admitted and which has a multiplicity of holes (5a) and at least two distribution plates (6, 7) which have a hole pattern of holes (6a, 7a) being arranged between the top side of the (topmost) plate-type heat exchanger (la) and the liquid distributor (4) at a distance from and parallel to one another, the predistribution plate (5) and the distribution plates (6, 7) extending over the entire housing cross section, the diameter of the holes (6a, 7a) of the distribution plates (6, 7) being greater than the diameter of the holes (5a) of the predistribution plate (5), and the holes (5a, 6a, 7a) being oriented relative to one another in such a way that the liquid jets (S₅, S₆) discharging from the holes (5a, 6a) at least partly strike a web present between the holes (6a, 7a) of the distribution plate (6, 7) located in each case underneath.

2. Apparatus according to Claim 1, characterized in that, in the case of a predistribution plate (5) having 500 to 1000 holes per m² of in each case 6 mm diameter, the distribution plates (6, 7) are provided with about 5000 holes per m² of in each case 10 mm diameter and are arranged at a distance from one another of about 10 to 20 mm.

## Revendications

1. Dispositif chauffé à la vapeur pour l'évaporation ou l'épaississement de liquides, par exemple d'eau de mer ou de jus de betteraves sucrières, comprenant au moins un échangeur de chaleur qui est conçu sous la forme d'un échangeur de chaleur à plaques (1a, 1b, 1n) et auquel le liquide est amené par le haut par l'intermédiaire d'un moyen de répartition de liquide comprenant un répartiteur de liquide (4) en forme de cuvette, de façon qu'à l'intérieur de l'échangeur de chaleur à plaques (1a, 1b, 1n) le liquide s'écoule vers le bas sous la forme d'un film descendant sur la surface intérieure de canaux verticaux et soit ainsi chauffé par de la vapeur en courants croisés et/ou à contre-courant, entre le dessus de l'échangeur de chaleur à plaques (le plus haut) (1a) et le répartiteur de liquide (4) étant disposées, à distance les unes des autres et parallèlement les unes aux autres, une tôle de pré-répartition (5) constamment exposée au liquide et pourvue d'une multitude de trous (5a) et au moins deux tôles de répartition (6, 7) pourvues d'un ensemble perforé constitué de trous (6a, 7a), la tôle de pré-répartition (5) et les tôles de répartition (6, 7) s'étendant sur toute la section transversale de l'enceinte, le diamètre les trous (6a, 7a) des tôles de répartition (6, 7) étant supérieur au diamètre des trous (5a) de la tôle de pré-répartition (5), et les trous (5a, 6a, 7a) étant orientés les uns par rapport aux autres de façon que les jets de liquide (S₅, S₆) sortant par les trous (5a, 6a) frappent au moins partiellement des isthmes situés entre les trous (6a, 7a) de la tôle de répartition (6, 7) placée en dessous.

2. Dispositif selon la revendication 1, caractérisé en ce que, dans le cas d'une tôle de pré-répartition (5) pourvue de 500 à 1 000 trous par m² de chacun 6 mm de diamètre, les tôles de répartition (6, 7) sont pourvues d'environ 5 000 trous par m² de chacun 10 mm de diamètre et sont disposées à une distance mutuelle d'environ 10 à 20 mm.
